# EUROPÄISCHE PATENTANMELDUNG

(11) **EP 4 592 584 A1**
(43) Veröffentlichungstag der Anmeldung: **30.07.2025**
(21) Anmeldenummer: 25152050.8
(22) Anmeldetag: 15.01.2025
(51) Int. Cl.: F17D 1/04

(54) **VERFAHREN ZUM KONTROLLIERTEN ABFÜHREN EINES ABZUSCHIRMENDEN GASES AUS EINEM GASFÜHRENDEN LEITUNGSABSCHNITT**

(30) Priorität: 23.01.2024 DE 102024101843
(71) Anmelder: Westnetz GmbH, 44139 Dortmund (DE)
(72) Erfinder: Ewering, Dietmar, 48565 Steinfurt (DE); Peters, Klaus, 46483 Wesel (DE)
(74) Vertreter: Bals & Vogel Patentanwälte PartGmbB

(57) **Zusammenfassung**

Die Erfindung betrifft ein Verfahren zum kontrollierten Abführen eines abzuschirmenden Gases (G) aus einem gasführenden Leitungsabschnitt (4), aufweisend die Schritte eines Einführens (200) einer ersten Gasführungseinheit (8a) in den Leitungsabschnitt (4) an einer ersten Gaseinführposition (E1) des Leitungsabschnitts (4), eines Einführens (300) einer zweiten Gasführungseinheit (8b) in den Leitungsabschnitt (4) an einer zweiten Gaseinführposition (E2) des Leitungsabschnitts (4) sowie eines Einführens (400) eines Intergases (IG) in den Leitungsabschnitt (4) über die erste Gasführungseinheit (8a) zur Überführung (500) des abzuschirmenden Gases (G) aus dem gasführenden Leitungsabschnitt (4) in ein Gasreservoir (10).

## Beschreibung

Die vorliegende Erfindung betrifft ein Verfahren und ein System zum kontrollierten Abführen eines abzuschirmenden Gases aus einem gasführenden Leitungsabschnitt.

Gasführende Leitungen oder Leitungsabschnitte müssen von Zeit zu Zeit gewartet oder im Schadensfall repariert werden. Vor solchen Wartungs- oder Reparaturmaßnahmen müssen die Leitungen oder Leitungsabschnitte kontrolliert entleert werden. Hierzu wird das in den Leitungen geführte Gas in der Regel in die Atmosphäre abgelassen.

Nachteiliger Weise ist ein solches Ablassen für gesundheitsschädliche oder toxische Gase nicht möglich. Aufgrund von derzeit ausgearbeiteten Verordnungen zur Vermeidung von CO₂-Emissionen wird es zudem in absehbarer Zeit vermutlich auch nicht mehr gestattet sein, treibhauswirksame Gase, wie Erdgas oder andere kohlenwasserstoffhaltige Gase gegen die Atmosphäre zu entspannen bzw. in die Atmosphäre einzubringen.

Es ist daher die Aufgabe der vorliegenden Erfindung, die voranstehend genannten Nachteile bekannter Systeme und Verfahren zum Abführen eines abzuschirmenden Gases aus einem gasführenden Leitungsabschnitt zumindest teilweise zu beheben. Insbesondere ist es die Aufgabe der vorliegenden Erfindung ein Verfahren und ein System zur Verfügung zu stellen, das eine schnelle, sichere, kosteneffiziente und umweltschonende Abführung eines abzuschirmenden Gases aus einem gasführenden Leitungsabschnitt ermöglicht.

Die voranstehende Aufgabe wird gelöst durch ein Verfahren mit den Merkmalen des Anspruchs 1 sowie ein System gemäß Anspruch 11. Weitere Merkmale und Details der Erfindung ergeben sich aus den Unteransprüchen, der Beschreibung und den Zeichnungen. Technische Merkmale, die zu dem erfindungsgemäßen Verfahren offenbart werden, gelten dabei auch in Verbindung mit dem erfindungsgemäßen System und umgekehrt, sodass bezüglich der Offenbarung zu den einzelnen Erfindungsaspekten stets wechselseitig Bezug genommen wird bzw. werden kann.

Erfindungsgemäß ist ein Verfahren zum kontrollierten Abführen eines abzuschirmenden Gases aus einem gasführenden Leitungsabschnitt vorgesehen. Das erfindungsgemäße Verfahren weist hierbei die Schritte eines Einführens einer ersten Gasführungseinheit in den Leitungsabschnitt an einer ersten Gaseinführposition des Leitungsabschnitts, eines Einführens einer zweiten Gasführungseinheit in den Leitungsabschnitt an einer zweiten Gaseinführposition des Leitungsabschnitts sowie eines Einführens eines Intergases in den Leitungsabschnitt über die erste Gasführungseinheit zur Überführung des abzuschirmenden Gases aus dem gasführenden Leitungsabschnitt in ein Gasreservoir, auf.

Unter einem kontrollierten Abführen eines Gases aus einem gasführenden Leitungsabschnitt kann im Rahmen der Erfindung insbesondere ein gezieltes Überführen eines Gases aus einem Leitungsabschnitt in ein Gasreservoir verstanden werden. Unter einem abzuschirmenden Gas kann im Rahmen der Erfindung ferner ein aus verschiedenen (bspw. gesundheitlichen oder umweltbedingten) Gründen nicht in die Atmosphäre ablassbares Gas verstanden werden. Es versteht sich zudem, dass als Gas insbesondere ein unter Standardbedingungen, wie Raumtemperatur (25°C) und einem Druck von einem bar, gasförmiges Medium verstanden werden kann. Ein Gasreservoir kann gegenständlich in Form eines Behälters, bspw. eines Druckbehälters oder auch in Form eines weiteren Leitungsabschnitts ausgebildet sein, der von dem zu leerenden Leitungsabschnitt abtrennbar ist. Das erfindungsgemäße Verfahren kann in einfach aufgebauten Verteilnetzen oder auch in komplex vermaschten Netzen eingesetzt werden. Auch ein Einsatz des gegenständlichen Verfahrens in den Gasnetzen von privaten Haushalten ist denkbar. Bei der Anwendung in komplexer aufgebauten vermaschten Netzen kann das Gasreservoir hierbei insbesondere in Form von abtrennbaren Leitungsteilen ausgebildet sein.

Im Rahmen der Erfindung ist erkannt worden, dass auf Basis der erfindungsgemäß vorgesehenen Schritte eines Einführens einer ersten und zweiten Gasführungseinheit sowie eines Intergases über die erste Gasführungseinheit in einen Leitungsabschnitt, ein abzuschirmendes Gases auf schnelle, sichere, kosteneffiziente und umweltschonende Weise aus dem gasführenden Leitungsabschnitt in ein Gasreservoir überführt werden kann.

Im Hinblick auf einen zuverlässigen Schutz eines benachbart von dem gasführenden Leitungsabschnitt angeordneten übrigen Leitungsteils eines Gasverteilsystems kann gegenständlich vorteilhafterweise vorgesehen sein, dass ein Absperren des Leitungsabschnitts an einer ersten Absperrposition und an einer zweiten Absperrposition vorgesehen ist, wobei zum Absperren des Leitungsabschnitts vorzugsweise ein erstes und zweites Absperrmittel verwendet werden. Die Absperrmittel können vorteilhafterweise in Form von Absperrventilen ausgebildet sein. Auch ist es vorstellbar, eine Absperrung über eine Gasführungseinheit selbst vorzunehmen, vorzugsweise über die Anordnung von Sperrblasen.

Im Hinblick auf eine schnelle und konstruktiv unaufwändige Einführung einer ersten und zweiten Gasführungseinheit in einen gasführenden Leitungsabschnitt zum kontrollierten Abführen eines abzuschirmenden Gases aus dem gasführenden Leitungsabschnitt kann erfindungsgemäß vorteilhafterweise vorgesehen sein, dass das Einführen einer ersten und zweiten Gasführungseinheit mittels eines Anbohrens des Leitungsabschnitts an der ersten und zweiten Gaseinführposition erfolgt, wobei das Anbohren vorzugsweise mittels der Verwendung eines Anbohrgerätes und/oder Anbohrschellen und/oder Absperrkugelhähnen erfolgt. Ein derartiges Einführen einer ersten und zweiten Gasführungseinheit in einen Leitungsabschnitt kann insbesondere unter Luftausschluss erfolgen.

Zur Minimierung eines Verbrauchs eines Inertgases zum kontrollierten Abführen eines abzuschirmenden Gases aus dem gasführenden Leitungsabschnitt kann es gegenständlich ferner von Vorteil sein, wenn das Einführen von Inertgas in den Leitungsabschnitt solange erfolgt, bis nur noch ein definierbarer Restgehalt an abzuschirmendem Gas in dem Leitungsabschnitt vorhanden ist, wobei der definierbare Restgehalt an abzuschirmendem Gas vorzugsweise über eine Messung des Gehaltes des abzuschirmenden Gases innerhalb der zweiten Gasführungseinheit bestimmt wird, wobei die Messung des Gehaltes des abzuschirmendem Gases insbesondere kontinuierlich erfolgt.

Im Hinblick auf eine Minimierung eines Verbrauchs eines Inertgases zum schnellen und kontrollierten Abführen eines abzuschirmenden Gases aus dem gasführenden Leitungsabschnitt kann es gegenständlich ferner vorgesehen sein, wenn das Einführen von Inertgas in den Leitungsabschnitt mit einem Druck erfolgt, der größer ist, als der Betriebsdruck des abzuschirmenden Gases im Betrieb des Leitungsabschnitts, vorzugsweise mit einem Druck, der mindestens das 1,2-fache des Betriebsdrucks des abzuschirmenden Gases beträgt, insbesondere mindestens das 1,5-fache. Über das Einbringen eines Inertgases mit einem Druck, der größer ist, als der Betriebsdruck des abzuschirmenden Gases, kann ein abzuschirmendes Gas sicher aus dem gesperrten Leitungsabschnitt verdrängt werden und über die zweite Gasführungseinheit in ein Gasreservoir befördert werden.

Zur Vermeidung von Druckstößen oder Überdruckschäden kann es ferner von Vorteil sein, wenn ein Ablassen von überschüssigem Inertgas aus dem Leitungsabschnitt vorgesehen ist, wobei das Ablassen des überschüssigen Intergases vorzugsweise bis zu einem Druck von 1 bar erfolgt, wobei das Ablassen des überschüssigen Intergases insbesondere über die erste Gasführungseinheit erfolgt.

Im Hinblick auf eine möglichst große umweltschonende Wirkung des Einsatzes des gegenständlichen Verfahrens kann vorteilhafterweise vorgesehen sein, dass das abzuschirmende Gas ein Treibhausgas ist oder ein Treibhausgas aufweist, wobei das abzuschirmende Gas vorzugsweise Erdgas ist oder Erdgas aufweist. Auf diese Weise kann durch die Anwendung des gegenständlichen Verfahrens sichergestellt werden, dass Treibhausgase nicht in die Atmosphäre gelangen.

Im Hinblick auf eine möglichst große gesundheitsschonende Wirkung des Einsatzes des gegenständlichen Verfahrens kann vorteilhafterweise ferner vorgesehen sein, dass das abzuschirmende Gas ein gesundheitsschädliches Gas und/oder toxisches Gas ist oder aufweist, wobei das abzuschirmende Gas vorzugsweise CO, H2S oder Chlorgas ist oder aufweist. Auf diese Weise kann durch die Anwendung des gegenständlichen Verfahrens sichergestellt werden, dass gesundheitsschädliche oder toxische Gase nicht in die Atmosphäre gelangen.

Im Rahmen einer einfachen, kostengünstigen und leitungsschonenden Ausführung des gegenständlichen Verfahrens kann vorteilhafterweise ferner vorgesehen sein, dass das Inertgas Stickstoff oder Argon ist oder Stickstoff und/oder Argon aufweist. Das Inertgas kann vorzugsweise über eine Druckgasflasche zugegeben werden, die bspw. mit der ersten Gasführungseinheit verbunden ist, bzw. verbunden werden kann. Die Druckgasflasche kann nach Durchführung der durchzuführenden Arbeiten auf einfache Weise wieder demontiert werden.

Im Rahmen einer kosteneffektiven, insbesondere ressourcenschonenden Ausführung des erfindungsgemäßen Verfahrens kann vorteilhafterweise ferner vorgesehen sein, dass die Überführung des abzuschirmenden Gases aus dem gasführenden Leitungsabschnitt in das Gasreservoir über die zweite Gasführungseinheit erfolgt, wobei vorzugsweise während der Überführung des abzuschirmenden Gases innerhalb der zweiten Gasführungseinheit der Anteil des abzuschirmenden Gases innerhalb des gasführenden Leitungsabschnitts ermittelt wird, insbesondere kontinuierlich ermittelt wird. So kann insbesondere schnell der Zeitpunkt ermittelt werden, an dem das abzuschirmende Gas vollständig bzw. bis zu einem definierbaren Anteil aus dem gasführenden Leitungsabschnitt entfernt worden ist.

Im Rahmen einer zuverlässigen und vollständigen Abtrennung eines Inertgases von einem abzuschirmenden Gas kann erfindungsgemäß vorteilhafterweise vorgesehen sein, dass das in das Gasreservoir überführte abzuschirmende Gas aus dem gasführenden Leitungsabschnitt vor einer Überführung aufgereinigt wird, vorzugsweise über eines der nachfolgend genannten Verfahren:
- chemisches Absorptionsverfahren,
- Adsorptionsverfahren,
- Destillationsverfahren,
- Membrantrennverfahren,
- Kryogenes Trennverfahren.

Auf diese Weise kann sichergestellt werden, dass das in das Gasreservoir abgeführte abzuschirmende Gas auch widerverwendet werden kann. Es versteht sich, dass auch mehr als ein Trennverfahren angewendet werden kann, bspw. nacheinander, insbesondere stufenweise. Die Auswahl der geeigneten Methode bzw. der geeigneten Methoden kann vorzugsweise auf Basis des abzuschirmenden Gases und/oder auf Basis des Inertgases erfolgen.

Im Hinblick auf eine vollständige Rückführung eines bearbeiteten Leitungsabschnitts in einen früheren funktionierenden Zustand kann gegenständlich ferner von Vorteil sein, wenn ein Einführen von abzuschirmendem Gas aus dem Gasreservoir in den Leitungsabschnitt zur Überführung des Inertgases aus dem Leitungsabschnitt erfolgt, wobei das abzuschirmende Gas aus dem Gasreservoir über die zweite Gasführungseinheit in den Leitungsabschnitt eingeführt wird, wobei insbesondere das verdrängte Inertgas über die erste Gasführungseinheit in die Atmosphäre abgelassen wird. Das Einführen von abzuschirmendem Gas aus dem Gasreservoir in den Leitungsabschnitt zur Überführung des Inertgases aus dem Leitungsabschnitt erfolgt entsprechend, wenn die durchzuführenden Arbeiten an dem Leitungsabschnitt (bspw. eine Einbindung einer neuen Leitung) abgeschlossen sind. Zur Vereinfachung der Ausführung des gegenständlichen Verfahrens sowie zur Verbesserung der Genauigkeit ist es ferner denkbar, dass das Verfahren die Verwendung künstlicher Intelligenz umfasst. Es versteht sich in Bezug auf das erfindungsgemäße Verfahren zudem, dass einzelne, mehrere oder alle obligatorischen und/oder optionalen Schritte des erfindungsgemäßen Verfahrens in der vorgeschlagenen Reihenfolge, aber auch abweichend von der vorgeschlagenen Reihenfolge ausgeführt werden können. Hierbei können einzelne, mehrere oder alle obligatorischen und/oder optionalen Schritte des erfindungsgemäßen Verfahrens insbesondere wiederholt, bspw. zyklisch wiederholt ausgeführt werden. Es versteht sich ferner, dass einzelne, mehrere oder alle der obligatorischen und optionalen Schritte des erfindungsgemäßen Verfahrens gegenständlich auch zumindest teilweise automatisch bzw. automatisiert ausgeführt werden können, insbesondere durch einen Computer implementiert werden können.

Ebenfalls Gegenstand der Erfindung ist ferner ein System zum kontrollierten Abführen eines abzuschirmenden Gases aus einem gasführenden Leitungsabschnitt, insbesondere zur Durchführung eines voranstehend beschriebenen Verfahrens. Hierbei umfasst das erfindungsgemäße System eine erste Gasführungseinheit zum Einführen in den Leitungsabschnitt an einer ersten Gaseinführposition des Leitungsabschnitts, eine zweite Gasführungseinheit zum Einführen in den Leitungsabschnitt an einer zweiten Gaseinführposition des Leitungsabschnitts und ein Gasreservoir zur Aufnahme des abzuschirmenden Gases aus dem gasführenden Leitungsabschnitt. Damit weist das erfindungsgemäße System die gleichen Vorteile auf, wie sie bereits ausführlich in Bezug auf das erfindungsgemäße Verfahren beschrieben werden sind.

Im Hinblick auf einen zuverlässigen Schutz eines benachbart von dem gasführenden Leitungsabschnitt angeordneten übrigen Leitungsteils eines Gasverteilsystems kann gegenständlich vorteilhafterweise vorgesehen sein, dass ein erstes Absperrmittel zum Absperren des Leitungsabschnitts an einer ersten Absperrposition und ein zweites Absperrmittel zum Absperren des Leitungsabschnitts an einer zweiten Absperrposition vorgesehen sind, wobei vorzugsweise das erste und/oder zweite Absperrmittel in Form von Absperrventilen ausgebildet sind, wobei die Absperrventile insbesondere in Form von Kugelhähnen, Absperrklappen, Absperrschiebern oder Klappenventilen ausgebildet sind.

Im Hinblick auf eine schnelle und konstruktiv unaufwändige Einführung einer ersten und zweiten Gasführungseinheit in einen gasführenden Leitungsabschnitt zum kontrollierten Abführen eines abzuschirmenden Gases aus dem gasführenden Leitungsabschnitt, vorzugsweise unter Luftausschluss, kann erfindungsgemäß vorteilhafterweise vorgesehen sein, dass Anbohrgeräte und/oder Anbohrschellen und/oder Absperrkugelhähne zum Einführen einer ersten und zweiten Gasführungseinheit an der ersten und zweiten Gaseinführposition des Leitungsabschnitts vorgesehen sind. Hierbei können vorteilhafterweise zunächst die Anbohrschellen an der ersten und zweiten Gaseinführposition an den Leitungsabschnitt angebracht werden, wobei mittels eines Anbohrgerätes anschließend durch geöffnete Absperrkugelhähne hindurch eine abgedichtete Anbohrung des Leitungsabschnitts erfolgt, um ein Austreten des Gases aus dem Leitungsabschnitt in die Atmosphäre im Falle der Einführung des Bohrlochs in den Leitungsabschnitt zu verhindern.

Im Rahmen einer konstruktiv einfachen Ausführungsform eines Systems zur Gewährleistung eines kontrollierten Abführens eines abzuschirmenden Gases aus einem gasführenden Leitungsabschnitt kann erfindungsgemäß vorteilhafterweise vorgesehen sein, dass die erste und zweite Gasführungseinheit jeweils eine erste und zweite Sperrblase zur Sperrung und/oder zur Sperrung und Durchführung eines abzuschirmenden Gases und eines Inertgases aufweisen, wobei die erste Gasführungseinheit vorzugsweise eine Absperrblase zur Sperrung und eine Durchlasssperrblase zur Sperrung und Durchführung eines abzuschirmenden Gases und eines Inertgases aufweist und die zweite Gasführungseinheit zwei Durchlasssperrblasen zur Sperrung und Durchführung eines abzuschirmenden Gases und eines Inertgases aufweist. Über eine Zuleitung zu einem Inertgasbehälter können die Sperrblasen mit Inertgas befüllt werden und dabei von dem abzuschirmenden Gas so weit aufgedrückt werden, dass ein Leitungsabschnitt an einer entsprechenden Stelle abgesperrt ist (Absperrblase) bzw. ein abzuschirmendes Gas nur über eine innerhalb des Blase angeordnete Durchführung transportiert werden kann (Durchlasssperrblase). Die erste und zweite Gasführungseinheit kann somit vorzugsweise in Form eines Durchlassblasensetz- und Sperrgerätes ausgebildet sein.

Im Hinblick auf eine konstruktiv einfache Ausführungsform eines Systems zur schnellen und kontrollierten Abführung eines abzuschirmenden Gases aus einem
gasführenden Leitungsabschnitt kann erfindungsgemäß vorteilhafterweise vorgesehen sein, dass die erste und zweite Gasführungseinheit jeweils eine erste und zweite Leitung zur Führung eines abzuschirmenden Gases und eines Inertgases aufweist, wobei die erste und zweite Leitung vorzugsweise parallel zueinander angeordnet sind und in einer Leitungszusammenführung zusammenlaufen, wobei die Leitungszusammenführung insbesondere über ein Absperrventil mit den Sperrblasen verbunden ist.

Für eine automatische Durchführung bzw. Regelung des gegenständlichen Verfahrens ist es ferner denkbar, dass die erste und zweite Gasführungseinheit jeweils ein erstes und zweites regelbares Ventil zur Steuerung eines Gasflusses aufweist, wobei vorzugsweise das erste Ventil an der ersten Leitung und das zweite Ventil an der zweiten Leitung angeordnet ist, wobei das erste und zweite Ventil insbesondere in Form eines automatisch regelbaren und ansteuerbaren Ventils ausgebildet ist. Die Ventile können dabei insbesondere dazu ausgebildet sein, in bestimmten definierbaren oder definierten Zuständen, die Gas bzw. Inertgaszufuhr zu unterbrechen, bzw. zu regulieren. So kann innerhalb der zweiten Gasführungseinheit bspw. kontinuierlich der Anteil an Inertgas und Gas gemessen werden und die Steuerung der Ventile bzw. Regelung entsprechend angepasst werden.

Im Rahmen einer einfachen, übersichtlichen und kontrollierten Ausführung des gegenständlichen Verfahrens ist es ferner denkbar, dass eine zentrale Steuer- und Überwachungseinheit vorgesehen ist, wobei die Steuer- und Überwachungseinheit vorzugsweise einen Sensor zur Erfassung eines abzuschirmenden Gases aufweist, wobei der Sensor insbesondere zwischen der ersten und zweiten Gasführungseinheit innerhalb des Leitungsabschnitts angeordnet ist. Auf diese Weise kann bspw. eine Zwischenraumüberwachung innerhalb des Leitungsabschnitts zwischen der ersten und zweiten Gasführungseinheit auf *"schleichend"* austretendes Gas erfolgen. Nach einem Einführen von Inertgas in den Leitungsabschnitt kann über die Steuer- und Überwachungseinheit bspw. geprüft werden, ob innerhalb des Leitungsabschnitts noch der gewünschte Anteil an Inertgas (bspw. 100%) vorliegt. Die Steuer- und Überwachungseinheit kann dabei vorzugsweise mit den regelbaren Ventilen der ersten und zweiten Gasführungseinheit (bspw. drahtlos) in Kommunikationsverbindung stehen, und auf Basis der Messungen eine automatische Steuerung einer Gaszufuhr von Inertgas oder des abzuschirmenden Gases aus dem Gasreservoir vornehmen. Ein erstes Ventil der zweiten Gasführungseinheit kann bspw. bei Erkennen einer Druckgleichheit (Atmosphärendruck) geschlossen werden, sodass sichergestellt werden kann, dass eine Sperrstrecke entspannt und inertisiert ist.

Im Rahmen einer zuverlässigen und vollständigen Abtrennung eines Inertgases von einem abzuschirmenden Gas kann erfindungsgemäß vorteilhafterweise vorgesehen sein, dass eine Aufreinigungseinheit zur Aufreinigung des in das Gasreservoir zu überführenden abzuschirmenden Gases vorgesehen ist, wobei die Aufreinigungseinheit vorzugsweise eine chemische Absorptionseinheit und/oder eine Adsorptionseinheit und/oder eine Destillationseinheit und/oder eine Membran und/oder eine kryogene Trenneinheit aufweist.

Je nach Ausführung eines Gasverteilungsnetzes kann das Gasreservoir als Druckbehälter oder als ein gasführender Leitungsabschnitt ausgebildet sein. So kann das Gasreservoir bspw. in komplexer aufgebauten vermaschten Netzen auch in Form eines abtrennbaren gasführenden Leitungsabschnitts ausgebildet sein.

Zur zuverlässigen Vermeidung eines Austretens eines abzuschirmenden Gases in die Atmosphäre kann vorteilhafterweise ferner vorgesehen sein, dass eine Brenneinheit zur kontrollierten Verbrennung des abzuschirmenden Gases vorgesehen ist, wobei die Brenneinheit vorzugsweise an einem regelbaren Ventil der ersten Gasführungseinheit angeordnet ist. So kann bspw. bei einer Einführung eines brennbaren abzuschirmenden Gases in die zweite Gasführungseinheit zur Verdrängung des eingeführten Inertgases nach einer vorgenommenen Arbeit an dem Leitungsabschnitt, das nach einer vollständigen Verdrängung des Inertgases aus dem Leitungsabschnitt austretende Gas mittels der Brenneinheit verbrannt werden, wodurch nicht nur ein selbst ein minimaler Austritt eines abzuschirmenden Gases verhindert wird, sondern gleichzeitig der Zeitpunkt einer Verdrängung des Inertgases aus dem Leitungsabschnitt angezeigt werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Hierbei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung der einzelnen Schritte eines erfindungsgemäßen Verfahrens zum kontrollierten Abführen eines abzuschirmenden Gases aus einem gasführenden Leitungsabschnitt gemäß einem ersten Ausführungsbeispiel,
- Fig. 2: eine schematische Darstellung eines erfindungsgemäßen Systems zum kontrollierten Abführen eines abzuschirmenden Gases aus einem gasführenden Leitungsabschnitt gemäß einem ersten Ausführungsbeispiel.

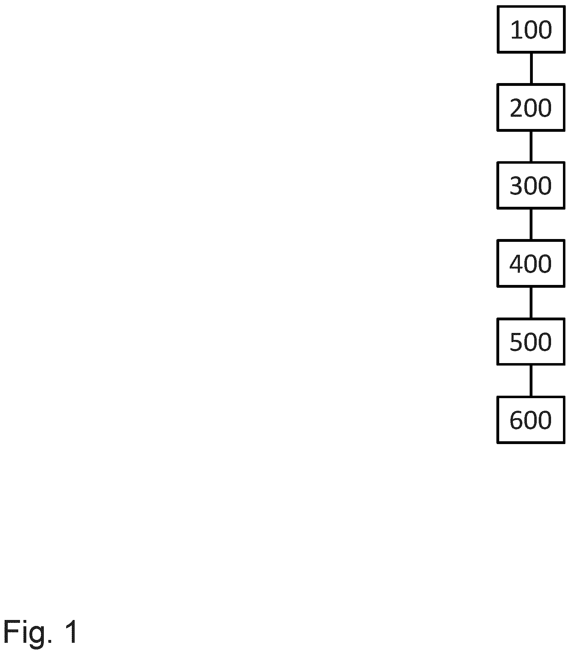

Fig. 1 zeigt eine schematische Darstellung der einzelnen Schritte eines erfindungsgemäßen Verfahrens zum kontrollierten Abführen eines abzuschirmenden Gases G in Form von Erdgas aus einem gasführenden Leitungsabschnitt 4 gemäß einem ersten Ausführungsbeispiel.

Wie gemäß Fig. 1 zur erkennen ist, umfasst das erfindungsgemäße Verfahren die Schritte eines Absperrens 100 des Leitungsabschnitts 4 an einer ersten Absperrposition A1 und an einer zweiten Absperrposition A2, eines Einführens 200 einer ersten Gasführungseinheit 8a in den Leitungsabschnitt 4 an einer ersten Gaseinführposition E1 des Leitungsabschnitts 4, eines Einführens 300 einer zweiten Gasführungseinheit 8b in den Leitungsabschnitt 4 an einer zweiten Gaseinführposition E2 des Leitungsabschnitts 4 sowie eines Einführens 400 eines Intergases IG in den Leitungsabschnitt 4 über die erste Gasführungseinheit 8a zur Überführung 500 des abzuschirmenden Gases G aus dem gasführenden Leitungsabschnitt 4 über die zweite Gasführungseinheit 8b in ein Gasreservoir 10.

Darüber hinaus umfasst das Verfahren gemäß dem dargestellten Ausführungsbeispiel ein Ablassen 500 von überschüssigem Inertgas IG aus dem Leitungsabschnitt 4 bis zu einem Druck von 1 bar sowie ein Einführen 600 von abzuschirmendem Gas G aus dem Gasreservoir 10 zurück in den Leitungsabschnitt 4 über die zweite Gasführungseinheit 8b zur Überführung des Inertgases IG aus dem Leitungsabschnitt 4 über die erste Gasführungseinheit 8b in die Atmosphäre. Das Einführen 600 von abzuschirmendem Gas G aus dem Gasreservoir 10 zurück in den Leitungsabschnitt 4 über die zweite Gasführungseinheit 8b erfolgt dabei entsprechend nachdem alle Reparatur oder Wartungsmaßnahmen an dem Leitungsabschnitt 4 vorgenommen wurden.

Das Einführen 200, 300 einer ersten und zweiten Gasführungseinheit 8a, 8b kann hierbei vorzugsweise mittels eines Anbohrens des Leitungsabschnitts 4 an der ersten und zweiten Gaseinführposition E1, E2 erfolgen, bspw. mittels der Verwendung eines Anbohrgerätes und/oder Anbohrschellen und/oder Absperrkugelhähnen.

Das Einführen 400 von Inertgas IG in den Leitungsabschnitt 4 kann zudem solange erfolgen, bis nur noch ein definierbarer Restgehalt an abzuschirmendem Gas G in dem Leitungsabschnitt 4 vorhanden ist.

Zudem erfolgt das Einführen 400 von Inertgas IG in den Leitungsabschnitt 4 vorliegend mit einem Druck, der größer ist, als der Betriebsdruck des abzuschirmenden Gases G im Betrieb des Leitungsabschnitts 4, vorzugsweise mit einem Druck, der mindestens das 1,2-fache des Betriebsdrucks des abzuschirmenden Gases G beträgt.

Das in das Gasreservoir 10 überführte abzuschirmende Gas G aus dem gasführenden Leitungsabschnitt 4 wird vor einer Überführung 500 aufgereinigt, vorzugsweise über ein chemisches Absorptionsverfahren, ein Adsorptionsverfahren, ein Destillationsverfahren, ein Membrantrennverfahren oder ein kryogenes Trennverfahren.

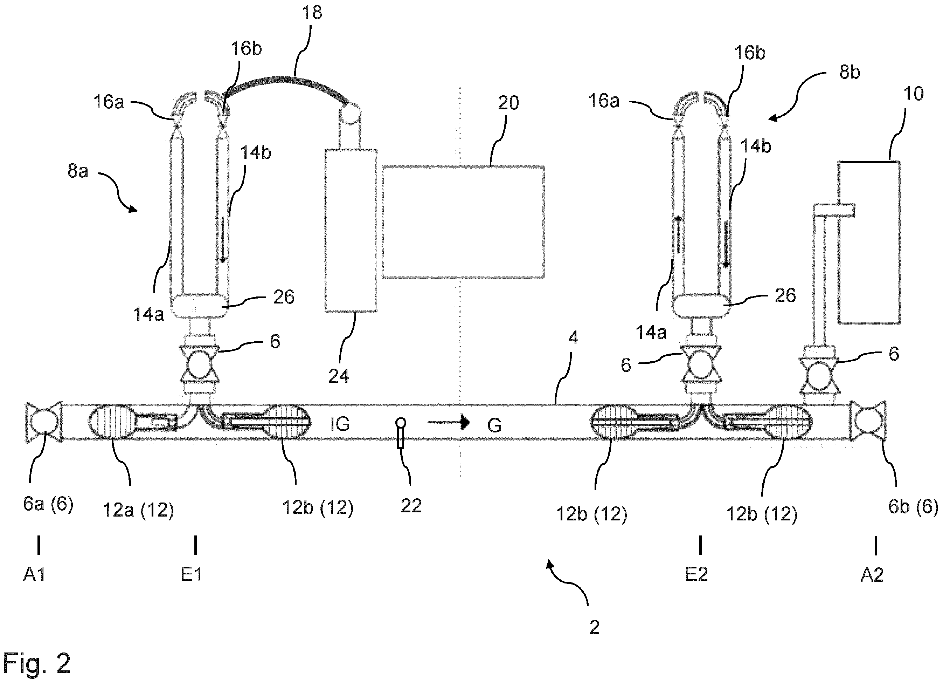

Fig. 2 zeigt eine schematische Darstellung eines erfindungsgemäßen Systems 2 zum kontrollierten Abführen eines abzuschirmenden Gases G aus einem gasführenden Leitungsabschnitt 4 gemäß einem ersten Ausführungsbeispiel.

Wie gemäß Fig. 2 zu erkennen ist, umfasst das System 2 eine erste Gasführungseinheit 8a zum Einführen 200 in den Leitungsabschnitt 4 an einer ersten Gaseinführposition E1 des Leitungsabschnitts 4, eine zweite Gasführungseinheit 8b zum Einführen 300 in den Leitungsabschnitt 4 an einer zweiten Gaseinführposition E2 des Leitungsabschnitts 4 sowie ein Gasreservoir 10 zur Aufnahme des abzuschirmenden Gases G aus dem gasführenden Leitungsabschnitt 4.

Wie zudem gemäß Figur 2 zu erkennen ist, weist das System ein erstes Absperrmittel 6a zum Absperren 100 des Leitungsabschnitts 4 an einer ersten Absperrposition A1 und ein zweites Absperrmittel 6b zum Absperren 100 des Leitungsabschnitts 4 an einer zweiten Absperrposition A2 auf, die in Form von Absperrventilen ausgebildet sind. Darüber hinaus sind weitere Absperrmittel 6 vorgesehen, die auch in Form von Absperrventilen oder in Form von Kugelhähnen, Absperrklappen, Absperrschiebern oder Klappenventilen ausgebildet sein können.

Wie ebenfalls zu erkennen ist, weisen die erste und zweite Gasführungseinheit 8a, 8b jeweils eine erste und zweite Sperrblase 12 zur Sperrung und/oder zur Sperrung und Durchführung eines abzuschirmenden Gases G und eines Inertgases IG auf, wobei die erste Gasführungseinheit 8a eine Absperrblase 12a zur Sperrung und eine Durchlasssperrblase 12b zur Sperrung und Durchführung eines abzuschirmenden Gases G und eines Inertgases IG aufweist und die zweite Gasführungseinheit 8b zwei Durchlasssperrblasen 12b zur Sperrung und Durchführung eines abzuschirmenden Gases G und eines Inertgases IG aufweist.

Zudem weist die erste und zweite Gasführungseinheit 8a, 8b jeweils eine erste und zweite Leitung 14a, 14b zur Führung eines abzuschirmenden Gases G und eines Inertgases IG auf, die parallel zueinander angeordnet sind und in einer Leitungszusammenführung 26 zusammenlaufen.

Die erste und zweite Gasführungseinheit 8a, 8b weisen zudem jeweils ein erstes und zweites regelbares Ventil 16a, 16b zur Steuerung eines Gasflusses auf, die an der ersten und zweiten Leitung 14a, 14b angeordnet sind und in Form von automatisch regelbaren und ansteuerbaren Ventilen ausgebildet sind.

Zudem ist eine zentrale Steuer- und Überwachungseinheit 20 die drahtlos mit einem Sensor 22 zur Erfassung eines abzuschirmenden Gases G verbunden ist, der zwischen der ersten und zweiten Gasführungseinheit 8a, 8b innerhalb des Leitungsabschnitts 4 angeordnet ist.

Das Gasreservoir 10 ist vorliegen in Form eines Druckbehälters ausgebildet, ebenso wie das Inertgasreservoir 24, das über eine Leitung 18 mit der Gasführungseinheit 8a verbunden ist.

Mittels des erfindungsgemäßen Verfahrens bzw. des erfindungsgemäßen Systems 2 zum kontrollierten Abführen eines abzuschirmenden Gases G aus einem gasführenden Leitungsabschnitt 4 ist es somit möglich, eine schnelle, sichere, kosteneffiziente und umweltschonende Abführung eines Gases aus einem gasführenden Leitungsabschnitt 4 zu gewährleisten.

### Bezugszeichenliste

- 2: System zum kontrollierten Abführen eines Gases
- 4: gasführender Leitungsabschnitt
- 6: Absperrmittel
- 6a: erstes Absperrmittel
- 6b: zweites Absperrmittel
- 8a: erste Gasführungseinheit
- 8b: zweite Gasführungseinheit
- 10: Gasreservoir
- 12: Sperrblase
- 12a: Absperrblase
- 12b: Durchlasssperrblase
- 14a: erste Leitung
- 14b: zweite Leitung
- 16a: erstes Ventil
- 16b: zweites Ventil
- 18: Leitung
- 20: Steuer- und Überwachungseinheit
- 22: Sensor
- 24: Inertgasreservoir

- A1: erste Absperrposition
- A2: zweite Absperrposition
- G: abzuschirmendes Gas
- IG: Inertgas
- E1: erste Gaseinführposition
- E2: zweite Gaseinführposition

- 100: Absperren eines Leitungsabschnitts
- 200: Einführen einer ersten Gasführungseinheit
- 300: Einführen einer zweiten Gasführungseinheit
- 400: Einführen eines Intergases
- 500: Ablassen von überschüssigem Intergas
- 600: Einführen von Gas aus dem Gasreservoir in den Leitungsabschnitt

## Patentansprüche

1. Verfahren zum kontrollierten Abführen eines abzuschirmenden Gases (G) aus einem gasführenden Leitungsabschnitt (4), aufweisend die Schritte:
- Einführen (200) einer ersten Gasführungseinheit (8a) in den Leitungsabschnitt (4) an einer ersten Gaseinführposition (E1) des Leitungsabschnitts (4),
- Einführen (300) einer zweiten Gasführungseinheit (8b) in den Leitungsabschnitt (4) an einer zweiten Gaseinführposition (E2) des Leitungsabschnitts (4),
- Einführen (400) eines Intergases (IG) in den Leitungsabschnitt (4) über die erste Gasführungseinheit (8a) zur Überführung (500) des abzuschirmenden Gases (G) aus dem gasführenden Leitungsabschnitt (4) in ein Gasreservoir (10).

2. Verfahren nach Anspruch 1,
**dadurch gekennzeichnet,**
**dass** ein Absperren (100) des Leitungsabschnitts (4) an einer ersten Absperrposition (A1) und an einer zweiten Absperrposition (A2) vorgesehen ist, wobei zum Absperren (100) des Leitungsabschnitts (4) vorzugsweise ein erstes und zweites Absperrmittel (6a, 6b) verwendet werden.

3. Verfahren nach Anspruch 1 oder 2,
**dadurch gekennzeichnet,**
**dass** das Einführen (200, 300) einer ersten und zweiten Gasführungseinheit (8a, 8b) mittels eines Anbohrens des Leitungsabschnitts (4) an der ersten und zweiten Gaseinführposition (E1, E2) erfolgt, wobei das Anbohren vorzugsweise mittels der Verwendung eines Anbohrgerätes und/oder Anbohrschellen und/oder Absperrkugelhähnen erfolgt.

4. Verfahren nach einem der vorangehenden Ansprüche,
**dadurch gekennzeichnet,**
**dass** das Einführen (400) von Inertgas (IG) in den Leitungsabschnitt (4) solange erfolgt, bis nur noch ein definierbarer Restgehalt an abzuschirmendem Gas (G) in dem Leitungsabschnitt (4) vorhanden ist, wobei der definierbare Restgehalt an abzuschirmendem Gas (G) vorzugsweise über eine Messung des Gehaltes des abzuschirmenden Gases (G) innerhalb der zweiten Gasführungseinheit (8b) bestimmt wird, wobei die Messung des Gehaltes des abzuschirmendem Gases (G) insbesondere kontinuierlich erfolgt.

5. Verfahren nach einem der vorangehenden Ansprüche,
**dadurch gekennzeichnet,**
**dass** das Einführen (400) von Inertgas (IG) in den Leitungsabschnitt (4) mit einem Druck erfolgt, der größer ist, als der Betriebsdruck des abzuschirmenden Gases (G) im Betrieb des Leitungsabschnitts (4), vorzugsweise mit einem Druck, der mindestens das 1,2-fache des Betriebsdrucks des abzuschirmenden Gases (G) beträgt, insbesondere mindestens das 1,5-fache, wobei dass das abzuschirmende Gas (G) ein Treibhausgas ist oder ein Treibhausgas aufweist.

6. Verfahren nach einem der vorangehenden Ansprüche,
**dadurch gekennzeichnet,**
**dass** ein Ablassen (500) von überschüssigem Inertgas (IG) aus dem Leitungsabschnitt (4) vorgesehen ist, wobei das Ablassen (500) des überschüssigen Intergases (IG) vorzugsweise bis zu einem Druck von 1 bar erfolgt, wobei das Ablassen (500) des überschüssigen Intergases (IG) insbesondere über die erste Gasführungseinheit (8a) erfolgt.

7. Verfahren nach einem der vorangehenden Ansprüche,
**dadurch gekennzeichnet,**
**dass** das abzuschirmende Gas (G) ein gesundheitsschädliches Gas und/oder toxisches Gas ist oder aufweist, und/oder
**dass** das Inertgas (IG) Stickstoff oder Argon ist oder Stickstoff und/oder Argon aufweist.

8. Verfahren nach einem der vorangehenden Ansprüche,
**dadurch gekennzeichnet,**
**dass** die Überführung (500) des abzuschirmenden Gases (G) aus dem gasführenden Leitungsabschnitt (4) in das Gasreservoir (10) über die zweite Gasführungseinheit (8b) erfolgt, wobei vorzugsweise während der Überführung (500) des abzuschirmenden Gases (G) innerhalb der zweiten Gasführungseinheit (8b) der Anteil des abzuschirmenden Gases (G) innerhalb des gasführenden Leitungsabschnitts (4) ermittelt wird, insbesondere kontinuierlich ermittelt wird.

9. Verfahren nach einem der vorangehenden Ansprüche,
**dadurch gekennzeichnet,**
**dass** das in das Gasreservoir (10) überführte abzuschirmende Gas (G) aus dem gasführenden Leitungsabschnitt (4) vor einer Überführung (500) aufgereinigt wird, vorzugsweise über eines der nachfolgend genannten Verfahren:
- chemisches Absorptionsverfahren,
- Adsorptionsverfahren,
- Destillationsverfahren,
- Membrantrennverfahren,
- Kryogenes Trennverfahren.

10. Verfahren nach einem der vorangehenden Ansprüche,
**dadurch gekennzeichnet,**
**dass** ein Einführen (600) von abzuschirmendem Gas (G) aus dem Gasreservoir (10) in den Leitungsabschnitt (4) zur Überführung des Inertgases (IG) aus dem Leitungsabschnitt (4) erfolgt, wobei das abzuschirmende Gas (G) aus dem Gasreservoir (10) über die zweite Gasführungseinheit (8b) in den Leitungsabschnitt (4) eingeführt wird, wobei insbesondere das verdrängte Inertgas (IG) über die erste Gasführungseinheit (8a) in die Atmosphäre abgelassen wird.

11. System (2) zum kontrollierten Abführen eines abzuschirmenden Gases (G) aus einem gasführenden Leitungsabschnitt (4), vorzugsweise zur Ausführung eines Verfahrens nach einem der vorangehenden Ansprüche, aufweisend:
- eine erste Gasführungseinheit (8a) zum Einführen (200) in den Leitungsabschnitt (4) an einer ersten Gaseinführposition (E1) des Leitungsabschnitts (4),
- eine zweite Gasführungseinheit (8b) zum Einführen (300) in den Leitungsabschnitt (4) an einer zweiten Gaseinführposition (E2) des Leitungsabschnitts (4),
- ein Gasreservoir (10) zur Aufnahme des abzuschirmenden Gases (G) aus dem gasführenden Leitungsabschnitt (4).

12. System (2) nach Anspruch 11,
**dadurch gekennzeichnet,**
**dass** ein erstes Absperrmittel (6a) zum Absperren (100) des Leitungsabschnitts (4) an einer ersten Absperrposition (A1) und ein zweites Absperrmittel (6b) zum Absperren (100) des Leitungsabschnitts (4) an einer zweiten Absperrposition (A2) vorgesehen sind, und/oder dass Anbohrgeräte und/oder Anbohrschellen und/oder Absperrkugelhähne zum Einführen (200, 300) einer ersten und zweiten Gasführungseinheit (8a, 8b) an der ersten und zweiten Gaseinführposition (E1, E2) des Leitungsabschnitts (4) vorgesehen sind.

13. System (2) nach einem der Ansprüche 11 bis 12,
**dadurch gekennzeichnet,**
**dass** die erste und zweite Gasführungseinheit (8a, 8b) jeweils eine erste und zweite Sperrblase (12) zur Sperrung und/oder zur Sperrung und Durchführung eines abzuschirmenden Gases (G) und eines Inertgases (IG) aufweisen, wobei die erste Gasführungseinheit (8a) vorzugsweise eine Absperrblase (12a) zur Sperrung und eine Durchlasssperrblase (12b) zur Sperrung und Durchführung eines abzuschirmenden Gases (G) und eines Inertgases (IG) aufweist und die zweite Gasführungseinheit (8b) zwei Durchlasssperrblasen (12b) zur Sperrung und Durchführung eines abzuschirmenden Gases (G) und eines Inertgases (IG) aufweist.

14. System (2) nach einem der Ansprüche 11 bis 13,
**dadurch gekennzeichnet,**
**dass** die erste und zweite Gasführungseinheit (8a, 8b) jeweils eine erste und zweite Leitung (14a, 14b) zur Führung eines abzuschirmenden Gases (G) und eines Inertgases (IG) aufweist, wobei die erste und zweite Leitung (14a, 14b) vorzugsweise parallel zueinander angeordnet sind und in einer Leitungszusammenführung (26) zusammenlaufen, wobei die Leitungszusammenführung (26) insbesondere über ein Absperrventil mit den Sperrblasen (12) verbunden ist.

15. System (2) nach einem der Ansprüche 11 bis 14,
**dadurch gekennzeichnet,**
**dass** die erste und zweite Gasführungseinheit (8a, 8b) jeweils ein erstes und zweites regelbares Ventil (16a, 16b) zur Steuerung eines Gasflusses aufweist, wobei vorzugsweise das erste Ventil (16a) an der ersten Leitung (14a) und das zweite Ventil (16b) an der zweiten Leitung (16b) angeordnet ist, wobei das erste und zweite Ventil (16a, 16b) insbesondere in Form eines automatisch regelbaren und ansteuerbaren Ventils ausgebildet ist.

16. System (2) nach einem der Ansprüche 11 bis 15,
**dadurch gekennzeichnet,**
**dass** eine zentrale Steuer- und Überwachungseinheit (20) vorgesehen ist, wobei die Steuer- und Überwachungseinheit (20) vorzugsweise einen Sensor (22) zur Erfassung eines abzuschirmenden Gases (G) aufweist, wobei der Sensor (22) insbesondere zwischen der ersten und zweiten Gasführungseinheit (8a, 8b) innerhalb des Leitungsabschnitts (4) angeordnet ist.

17. System (2) nach einem der Ansprüche 11 bis 16,
**dadurch gekennzeichnet,**
**dass** eine Aufreinigungseinheit zur Aufreinigung des in das Gasreservoir (10) zu überführenden abzuschirmenden Gases (G) vorgesehen ist, wobei die Aufreinigungseinheit vorzugsweise eine chemische Absorptionseinheit und/oder eine Adsorptionseinheit und/oder eine Destillationseinheit und/oder eine Membran und/oder eine kryogene Trenneinheit aufweist.

18. System (2) nach einem der Ansprüche 11 bis 17,
**dadurch gekennzeichnet,**
**dass** das Gasreservoir (10) ein Druckbehälter oder ein gasführender Leitungsabschnitt ist.

19. System (2) nach einem der Ansprüche 11 bis 18,
**dadurch gekennzeichnet,**
**dass** eine Brenneinheit zur kontrollierten Verbrennung des abzuschirmenden Gases vorgesehen ist, wobei die Brenneinheit vorzugsweise an einem regelbaren Ventil (16a, 16b) der ersten Gasführungseinheit (8a) angeordnet ist.
